# EUROPEAN PATENT APPLICATION

(11) **EP 4 703 785 A1**
(43) Date of publication of application: **04.03.2026**
(21) Application number: 24196471.7
(22) Date of filing: 26.08.2024
(51) Int. Cl.: G02B 21/06, G02B 21/36

(54) **A LIGHT SOURCE FOR A FOURIER PTYCHOGRAPHY MICROSCOPY SYSTEM**

(71) Applicant: CellaVision AB, 223 62 Lund (SE)
(72) Inventor: Almers, Martin, 226 51 Lund (SE); Hedlund, Sven, 226 57 Lund (SE); MORELL, Adam, 224 72 Lund (SE)
(74) Representative: AWA Sweden AB

(57) **Abstract**

The present inventive concept relates to a light source for a Fourier ptychography microscopy system, a Fourier ptychography microscopy system, and a method for capturing a set of digital images. The light source comprises a plurality of light-emitting elements (100), each light-emitting element configured to illuminate an illumination position (P) at one (1120) of a plurality of illumination angles (110), the plurality of illumination angles (110) comprising a first range of illumination angles (112) and a second range of illumination angles (114) different from the first range of illumination angles (112), wherein the plurality of light-emitting elements (100) comprises: a first set of light-emitting elements (102) consisting of light-emitting elements (1020) configured to emit light having a first optical bandwidth, and a second set of light-emitting elements (104) comprising light-emitting elements (1040, 1042, 1044) configured to emit light having a second optical bandwidth narrower than the first optical bandwidth; and wherein a majority of light-emitting elements configured to illuminate the illumination position (P) at illumination angles (1120) of the first range of illumination angles (112) belong to the first set of light-emitting elements (102), and a majority of light-emitting elements configured to illuminate the illumination position (P) at illumination angles (1140) of the second range of illumination angles (114) belong to the second set of light-emitting elements (104).

## Description

### Technical field

The present inventive concept relates to a light source for a Fourier ptychography microscopy system, to a Fourier ptychography microscopy system comprising the light source, and to a method for capturing a set of images using the light source.

### Background of the invention

Fourier Ptychography Microscopy is an emerging computational microscopy technique that can overcome the fundamental tradeoff between a microscope's resolution and field-of-view. The principle of Fourier Ptychography involves synthesis of a wider numerical aperture from a set of images acquired at various illumination angles. This results in increased resolution compared to a conventional microscope using, e.g., bright-field illumination. Each image is typically acquired under illumination of coherent light sources at various angles of incidence (typically from an array of light-emitting diodes), and the acquired image set is combined using an iterative phase retrieval algorithm into a final image.

An issue with using coherent light sources is that such light sources typically emit monochromatic light, and the final image formed by the iterative phase retrieval algorithm therefore only includes information within a narrow spectrum of wavelengths (i.e., corresponding to the wavelengths of the monochromatic light).

Thus, there exists a need for improvements within the art.

### Summary of the invention

In view of the above, it is an object of the present inventive concept to, at least partly, mitigate, alleviate, or eliminate one or more of the aboveidentified deficiencies in the art and disadvantages singly or in any combination and solve at least the above-mentioned problem.

According to a first aspect, a light source for a Fourier ptychography microscopy system is provided. The light source comprises: a plurality of light-emitting elements, each light-emitting element of the plurality of light-emitting elements being configured to illuminate an illumination position at one of a plurality of illumination angles, the plurality of illumination angles comprising a first range of illumination angles and a second range of illumination angles different from the first range of illumination angles, wherein the plurality of light-emitting elements comprises: a first set of light-emitting elements consisting of light-emitting elements configured to emit light having a first optical bandwidth, and a second set of light-emitting elements comprising light-emitting elements configured to emit light having a second optical bandwidth narrower than the first optical bandwidth; and wherein a majority of light-emitting elements configured to illuminate the illumination position at illumination angles of the first range of illumination angles belong to the first set of light-emitting elements, and a majority of light-emitting elements configured to illuminate the illumination position at illumination angles of the second range of illumination angles belong to the second set of light-emitting elements.

Within the context of this disclosure, "illumination angle" should be construed as an angle at which incident light illuminates the illumination position. An illumination angle may therefore correspond to a direction from which a light-emitting element is configured to illuminate the illumination position. The illumination angle may be defined relative to a central axis of the light source. Thus, an illumination angle is in a range from 0 degrees to 180 degrees. Further, no illumination angles are smaller than 0 degrees, i.e., there are no negative illumination angles. Furthermore, no illumination angles are larger than 180 degrees. The central axis may, e.g., be an axis of symmetry of the light source. The central axis may intersect the illumination position of the light source. When used in a Fourier ptychography microscopy system, the central axis of the light source may be substantially parallel to an optical axis of the Fourier ptychography microscopy system. Hence, when the light source is used in a Fourier ptychography microscopy system, the illumination angle may be an angle relative to the optical axis of the Fourier ptychography microscopy system.

Within the context of this disclosure, "optical bandwidth" should be construed as a range of wavelengths (or frequencies) of light. Hence, the optical bandwidth of light emitted by a light-emitting element should be understood as a range of wavelengths (or frequencies) of light that the light-emitting element is configured to emit. A skilled person is aware of different definitions of such range. For instance, the range may be a full width at half max (FWHM) or any other suitable measure.

By the present inventive concept, an optical bandwidth of light can be adapted to the illumination angle with which that light predominantly illuminates the illumination position of the light source. In Fourier ptychography microscopy, certain illumination angles may be more sensitive to optical bandwidth than others, and the present inventive concept thereby allows adapting the optical bandwidth of light to illumination angle. Thus, the light-emitting elements of the different sets are configured to predominantly emit light having different spectral content. For instance, the light source is capable of emitting light having a broader optical bandwidth predominantly in directions for which Fourier ptychography microscopy is less sensitive and light having a narrower optical bandwidth predominantly in directions for which Fourier ptychography microscopy is more sensitive. An advantage associated with using light having a broader optical bandwidth (e.g., light emitted by the first set of light-emitting elements) is that more information (i.e., information associated with a broader range of wavelengths) associated with a sample positioned at the illumination position may be acquired than what may be possible when using light having a narrower optical bandwidth (e.g., light emitted by the second set of light-emitting elements). For instance, the broader optical bandwidth may allow information associated with color of a sample positioned at the illumination position may be acquired. An advantage associated with using light having a narrower optical bandwidth (e.g., light emitted by the second set of light-emitting elements) is that information associated with a phase associated with a sample positioned at the illumination position may be acquired which may not be possible when using light having a broader optical bandwidth (e.g., light emitted by the first set of light-emitting elements). Thus, by comprising the first and second sets of light-emitting elements, the present light source may provide both of these advantages, i.e., information associated with a broader range of wavelengths of a sample and information associated with a phase of the sample.

The light-emitting elements of the first set of light-emitting elements may be further configured to emit light having a wavelength in a first wavelength range, and the light-emitting elements of the second set of light-emitting elements may be further configured to emit light having a wavelength in a second wavelength range different from the first wavelength range. Accordingly, a light source configured to illuminate the illumination position with light of different wavelengths and different optical bandwidths from different ranges of illumination angles may be allowed. This may, in turn, provide an improved illumination for Fourier ptychography microscopy applications. For instance, shorter wavelengths of light typically allow for a higher resolution in Fourier ptychography microscopy imaging. However, interesting features of, e.g., a sample positioned at the illumination position may be present in other wavelength ranges as well (e.g., longer wavelengths). Thus, by adapting the wavelength of light illuminating the illumination position to different illumination angles may allow capturing more information (e.g., information regarding finer details, phase and/or color) of a sample positioned at the illumination position.

Light-emitting elements of the first set of light-emitting elements may be configured to emit light having an optical bandwidth of 100 nm or broader. For instance, the light-emitting elements of the first set of light-emitting elements may be configured to emit light having an optical bandwidth of 200 nm or broader. Accordingly, the light-emitting elements of the first set may allow illuminating the illumination position with a wide range of wavelengths. This may, in turn, allow for capturing information of, e.g., a sample positioned at the illumination position for a wide range of wavelengths. Such information may, e.g., be used in a reconstruction algorithm for Fourier ptychography microscopy to reconstruct an image depicting the sample in color. However, it is to be understood that the information regarding the wide range of wavelengths may be used for other purposes as well. For instance, it may be used to classify the sample and/or identify one or more objects in the sample.

Light-emitting elements of the second set of light-emitting elements may be configured to emit light having an optical bandwidth of 50 nm or narrower. Accordingly, the light-emitting elements of the second set may allow illuminating the illumination position with a narrow range of wavelengths. This may, in turn, allow for capturing information of finer details of, e.g., a sample positioned at the illumination position. This information may be used in a reconstruction algorithm for Fourier ptychography microscopy to reconstruct an image depicting the sample at a high resolution. However, it is to be understood that the information regarding the narrow range of wavelengths may be used for other purposes as well. For instance, it may be used to classify the sample and/or identify one or more objects in the sample. As a further example, it may be used by a reconstruction algorithm for Fourier ptychography microscopy configured to determine a phase image of a sample positioned at the illumination position.

Illumination angles of the second range of illumination angles may be greater than illumination angles of the first range of illumination angles. Accordingly, the light source may be configured to predominantly illuminate the illumination position with light having the first optical bandwidth and a wavelength in the first wavelength range from lesser illumination angles and with light having the second optical bandwidth and a wavelength in the second wavelength range from greater illumination angles. This may, in turn, allow adapting the optical bandwidths of light emitted by the first and second sets of light-emitting elements such that the illumination position may be illuminated by a narrower optical bandwidth at greater illumination angles and by a broader optical bandwidth at lesser illumination angles. In Fourier ptychography microscopy, information regarding finer details of a sample is predominantly present for greater illumination angles. This may be understood as that such great illumination angles correspond to high spatial frequencies in a Fourier plane associated with the sample. It has been found that using narrower optical bandwidth for greater illumination angles may improve collection of information regarding finer details of the sample and this information may be used in a reconstruction algorithm for Fourier ptychography microscopy.

The second set of light-emitting elements may further comprise light-emitting elements configured to emit light having a wavelength in a third wavelength range different from the first wavelength range and the second wavelength range. Accordingly, the illumination position may additionally be illuminated by a wavelength in a third wavelength range at great illumination angles. This may, in turn, allow for more information (i.e., information associated with the wavelength in the third wavelength range) at great illumination angles regarding, e.g., a sample positioned at the illumination position to be captured.

The second set of light-emitting elements may further comprise light-emitting elements configured to emit light having a wavelength in a fourth wavelength range different from the first wavelength range, the second wavelength range, and the third wavelength range. Accordingly, the illumination position may be illuminated by additional wavelength ranges at great illumination angles. This may, in turn, allow for more information associated with a sample positioned at the illumination position at great illumination angles to be captured. In particular, the light-emitting elements of the second set of light-emitting elements may be configured to together cover a larger wavelength range while each light-emitting element may be configured to emit light having a narrower optical bandwidth.

According to a second aspect, a Fourier ptychography microscopy system is provided. The Fourier ptychography microscopy system comprises: a light source according to the first aspect configured to illuminate a sample positioned at an illumination position of the light source; an image sensor; a microscope objective configured to image the sample onto the image sensor; and circuitry configured to execute: an acquisition function configured to acquire a set of digital images by being configured to: control the light source to illuminate the illumination position with a plurality of illumination patterns, wherein an illumination pattern is formed by emitting light from one or more light-emitting elements of the plurality of light-emitting elements of the light source, and control the image sensor to capture a digital image for each illumination pattern of the plurality of illumination patterns.

The first range of illumination angles of the light source may consist of illumination angles lesser than an angle corresponding to a numerical aperture of the microscope objective.

Within the context of this disclosure, the wording "numerical aperture of a microscope objective" should be construed as a dimensionless number associated with a range of angles over which the microscope objective normally accepts light using conventional illumination (e.g., bright-field illumination). Hence, an illumination angle lesser than an angle corresponding to the numerical aperture of the microscope objective may correspond to an angle inside of the range of angles over which the microscope objective normally accepts light. Typically, a microscope objective having a higher numerical aperture may have a higher magnification than a microscope objective having a lower numerical aperture.

Accordingly, the system may be configured to illuminate the sample with light having a broader optical bandwidth for angles lesser than, or equal to, angles corresponding to the numerical aperture of the microscope objective. This may, in turn, allow the system to capture information regarding the sample for a wide range of wavelengths (i.e., the broad optical bandwidth of light emitted by the first set of light-emitting elements) for illumination angles lesser than, or equal to, an angle corresponding to the numerical aperture. It has been found that Fourier ptychography microscopy may be less sensitive to the optical bandwidth for illumination angles lesser than, or equal to, an angle corresponding to the numerical aperture of the microscope objective. Thus, by configuring the system such that light having a broader optical bandwidth illuminates the sample for angles lesser than, or equal to, an angle corresponding to the numerical aperture of the microscope objective, information of the sample for a wider range of wavelengths may be captured while still preserving the benefits of Fourier ptychography microscopy.

The second range of illumination angles of the light source may consist of illumination angles greater than the angle corresponding to the numerical aperture of the microscope objective.

Accordingly, the system may be configured to illuminate the sample with light having a narrower optical bandwidth for angles greater than angles corresponding to the numerical aperture of the microscope objective. This may, in turn, allow the system to capture information regarding finer details of the sample than what the microscope objective normally is capable of (e.g., using conventional microscopy illumination such as bright-field illumination). Further, by being configured to illuminate the sample with light having a narrower optical bandwidth for angles greater than angles corresponding to the numerical aperture of the microscope objective may allow the system to capture phase information (or information that may be used to determine a phase image) associated with the sample. It has been found that Fourier ptychography microscopy may be more sensitive to the optical bandwidth for illumination angles greater than an angle corresponding to the numerical aperture of the microscope objective. Thus, it may be more important to illuminate the sample with light having a narrower optical bandwidth for illumination angles greater than an angle corresponding to the numerical aperture of the microscope objective.

The circuitry may be further configured to execute: an image processing function configured to process the set of digital images. Accordingly, the system may be allowed to produce a processing output from the set of digital images. The processing output may be used to draw conclusions regarding the sample. For instance, the image processing function may be configured to one or more of: construct a digital image depicting the sample; classify the sample into one or more classes; and detect one or more objects within the sample.

The image processing function may be configured to input the set of digital images into a machine learning model trained to one or more of: construct a digital image depicting the sample; classify the sample into one or more classes; and detect one or more objects within the sample.

A skilled person is aware of further applications of the information associated with the sample (e.g., intensity/amplitude and/or phase information) that may be present in the set of digital images. For instance, the machine learning model may additionally or alternatively be trained to construct a digital image depicting a virtually stained sample. The digital image depicting a virtually stained sample may resemble a digital image depicting the sample after a staining agent has been applied to said sample. Put differently, the machine learning model may be trained to construct a digital image depicting a stained sample from a set of digital images of an unstained sample.

Within the context of this disclosure, the wording "machine learning model" should be construed as a model capable of predicting an outcome from an input without being explicitly programmed to do so. As a non-limiting example, the machine learning model may be, or be based on, a convolution neural network. However, it is to be understood that the skilled person is aware of other types of similar models that may be used as well.

Accordingly, compared to a conventional Fourier ptychography microscopy algorithm, an enhanced image processing function capable of more accurate predictions from the input set of digital images may be allowed. Further, using a machine learning model may provide a less complex implementation of the image processing function compared to a conventional Fourier ptychography microscopy algorithm. In particular, it has been found that using a trained machine learning model may be more accurate when processing digital images captured using light having a broader optical bandwidth (e.g., light that may be emitted by the light-emitting elements of the first set of light-emitting elements).

The image processing function may be configured to input the set of digital images into a machine learning model trained to construct a digital image depicting the sample, wherein a resolution of the constructed digital image may be higher than a resolution of a digital image of the set of digital images. Accordingly, a digital image depicting the sample at a resolution higher than what the microscope objective is normally capable of capturing using conventional microscopy illumination may be constructed.

The above-mentioned features of the first aspect, when applicable, apply to this second aspect as well. In order to avoid undue repetition, reference is made to the above.

According to a third aspect, a method for capturing a set of digital images of a sample using a light source according to the first aspect. The sample is positioned at an illumination position of the light source. The method comprises: illuminating the illumination position with a plurality of illumination patterns, wherein an illumination pattern is formed by emitting light from one or more light-emitting elements of the plurality of light-emitting elements of the light source; and capturing a digital image of the sample for each illumination pattern of the plurality of illumination patterns, thereby forming the set of digital images.

A digital image of the sample may be captured using an image sensor and a microscope objective configured to image the sample onto the image sensor.

The above-mentioned features of the first and/or second aspects, when applicable, apply to this third aspect as well. In order to avoid undue repetition, reference is made to the above.

Further features of, and advantages with, the present inventive concept will become apparent when studying the appended claims and the following description. The skilled person will realize that different features of the present inventive concept may be combined to create variants other than those described in the following, without departing from the scope of the present inventive concept.

### Brief description of the drawings

The aspects of the present inventive concept, including its particular features and advantages, will be readily understood from the following detailed description and the accompanying drawings, in which:
Figure 1A is a schematic illustration of a light source for a Fourier ptychography microscopy system.
Figure 1B is a schematic illustration of a first set of light-emitting elements and a second set of light-emitting elements.
Figure 1C is an illustration of a light source for a Fourier ptychography microscopy system.
Figure 2 is a schematic illustration of a Fourier ptychography microscopy system.
Figure 3 is a block scheme of a method for capturing a set of digital images.

### Detailed description

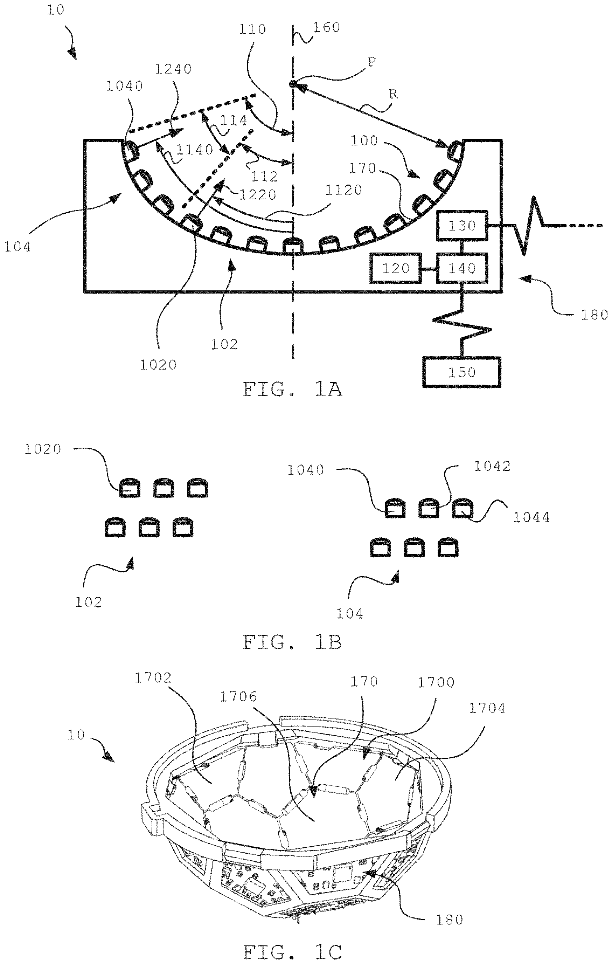

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description. A light source 10 for a Fourier ptychography microscopy system will now be described with reference to Fig. 1A - Fig. 1C.

Figure 1A illustrates a light source 10 for a Fourier ptychography microscopy system. As is seen in Fig. 1A, the light source 10 comprises a plurality of light-emitting elements 100. The plurality of light-emitting elements 100 may comprise one or more adjustable light-emitting elements. For instance, one or more of a color of emitted light, an optical bandwidth of emitted light, and an intensity of emitted light may be adjustable. A light-emitting element 1020, 1040, 1042, 1044 of the plurality of light-emitting elements 100 may comprise one or more light emitters. Each light-emitting element 1020, 1040, 1042, 1044 of the plurality of light-emitting elements 100 may comprise one or more light emitters. A light emitter may be a light-emitting diode (LED). For instance, a light-emitting element 1020, 1040, 1042, 1044 of the plurality of light-emitting elements 100 may comprise one or more LEDs. A light emitter may be a laser. A light-emitting element 1020, 1040, 1042, 1044 of the plurality of light-emitting elements 100 may comprise one or more lasers. A light-emitting element 1020, 1040, 1042, 1044 of the plurality of light-emitting elements 100 may comprise one or more LEDs and one or more lasers. The light emitters may be configured to emit polychromatic light and/or narrow-spectrum light (e.g., monochromatic or quasi-monochromatic light). Polychromatic light may be produced by simultaneously (or at least partly simultaneously) emitting light from two or more light emitters each configured to emit narrow-spectrum light (e.g., light of different colors, monochromatic, and/or quasi-monochromatic light). Put differently, a light-emitting element 1020, 1040, 1042, 1044 of the one or more light-emitting elements may comprise two or more light emitters, wherein a first light emitter of the two or more light emitters may be configured to emit light having a first spectrum and a second light emitter of the two or more light emitters may be configured to emit light having a second spectrum different from the first spectrum, whereby a spectrum of the polychromatic light may comprise the first spectrum and the second spectrum. The first spectrum and the second spectrum may be partially overlapping. The first spectrum and the second spectrum may be non-overlapping. The spectrum of the polychromatic light may be continuous or non-continuous. It is to be understood that a light-emitting element 1020, 1040, 1042, 1044 may comprise a plurality of light emitters. Each light emitter of the plurality of light emitters may be configured to emit light having a respective spectrum. The spectra of light emitted by the plurality of light emitters may be partially overlapping and/or non-overlapping. In this context, polychromatic light should be understood as light having a spectrum comprising a relatively broad range of wavelengths, whereas narrow-spectrum light should be understood as light having a relatively narrow spectrum (i.e., comprising a relatively narrow range of wavelengths). For instance, one or more of white light, quasi-white light, pseudo-white light, and broad-spectrum light may be examples of polychromatic light. Monochromatic and/or quasi-monochromatic light may be examples of narrow-spectrum light. Polychromatic light may have an optical bandwidth of 100 nm or more. For instance, polychromatic light may have an optical bandwidth of 200 nm or more. Polychromatic light may have an optical bandwidth of 400 nm or less. Narrow-spectrum light may have an optical bandwidth of 50 nm or less. For instance, narrow-spectrum light may have an optical bandwidth of 20 nm or less. Polychromatic light may be emitted from an LED configured to emit white light. An LED configured to emit white light may be referred to as a white LED. A white LED may be formed by, e.g., a blue LED covered in a layer of fluorescent material which when illuminated emits white light. The LEDs may be any type of LED, such as ordinary LED bulbs (i.e., traditional and inorganic LEDs), graphene LEDs, or LEDs typically found in displays (e.g., quantum dot LEDs (QLEDs) or organic LEDs (OLEDs)). However, other types of LEDs may be used as well. Polychromatic light may be emitted from a laser, e.g., from a laser utilizing supercontinuum generation. Narrow-spectrum light may be emitted by a LED. Narrow-spectrum light may be emitted by a laser. As a non-limiting example, the light source 10 may comprise one or more LEDs configured to emit polychromatic light and one or more lasers configured to emit narrow-spectrum light.

As is further illustrated in the example of Fig. 1A, the light source 10 may further comprise electronics 180. The electronics 180 may comprise one or more of a control module 120, a communication module 130, and a connection 140 to a power source 150. The control module 120 may have processing capabilities. Non-limiting examples of processing units comprises a central processing unit (CPU), a graphical processing unit (GPU), a field-programmable gate array (FPGA), etc. The control module 120 may have storage capabilities. The storage capabilities may comprise a memory. The memory may comprise a non-transitory computer-readable storage medium. The control module 120 may be configured to control one or more functions of the light source 10. For instance, the control module 120 may be configured to control the plurality of light-emitting elements 100. To that end, the control module 120 may be configured to receive control instructions. The control instructions may be received via the communication module 130. The control instructions may, e.g., comprise instructions on an intensity of light to be emitted by a light-emitting element 1020, 1040, 1042, 1044 of the plurality of light-emitting elements 100. Additionally, or alternatively, the control instructions may comprise information on which light-emitting element(s) 1020, 1040, 1042, 1044 is to emit light. The communication module 130 may be configured to communicate with external devices. For instance, the communication module 130 may be configured to communicate with one or more of a computer, a smartphone, a server, etc. The communication module 130 may be configured to communicate via a wired connection and/or a wireless connection. Non-limiting examples of wired connections may be USB, Firewire, Ethernet, etc. Non-limiting examples of wireless connections may be Wi-Fi, Bluetooth0, NFC, etc. The control instructions for the control module 120 may be received via the communications module 130. The connection 140 to a power source 150 may be a connection to an internal power source (e.g., an internal battery). The connection 140 to a power source 150 may, as is illustrated in the example of Fig. 1A, be a connection to an external power source.

As is illustrated in Fig. 1B, the plurality of light-emitting elements 100 comprises a first set of light-emitting elements 102 and a second set of light-emitting elements 104. The first set of light-emitting elements 102 consists of light-emitting elements 1020 configured to emit light having a first optical bandwidth. The first set of light-emitting elements 102 may be configured to emit polychromatic light. The first optical bandwidth may be 100 nm or broader. For instance, the first optical bandwidth may be 200 nm or broader. Thus, light-emitting elements 1020 of the first set of light-emitting elements 102 may be configured to emit light having an optical bandwidth of 100 nm or broader. The light-emitting elements 1020 of the first set of light-emitting elements 102 may be further configured to emit light having a wavelength in a first wavelength range. For instance, the first set of light-emitting elements 102 may be configured to emit light having an optical bandwidth of 100 nm, 200 nm, 300 nm, or broader. The second set of light-emitting elements 104 comprises light-emitting elements 1040, 1042, 1044 configured to emit light having a second optical bandwidth. The second optical bandwidth is narrower than the first optical bandwidth. The second set of light-emitting elements 104 may be configured to emit narrow-spectrum light. The second optical bandwidth may be 50 nm or narrower. Thus, light-emitting elements 1040, 1042, 1044 of the second set of light-emitting elements 104 may be configured to emit light having an optical bandwidth of 50 nm or narrower. For instance, the second set of light-emitting elements 104 may be configured to emit light having an optical bandwidth of 50 nm, 40, nm, 30 nm, 20 nm, or narrower. Light which a light-emitting element of the second set of light-emitting elements 104 is configured to emit may appear as a single color. For instance, light which a light-emitting element of the second set of light-emitting elements 104 is configured to emit may appear as red, green, blue, etc. To that end, the light-emitting elements 1040 of the second set of light-emitting elements 104 may be further configured to emit light having a wavelength in a second wavelength range. The second wavelength range may be different from the first wavelength range. Thus, the first set of light-emitting elements 102 and the second set of light-emitting elements 104 may be configured to emit light having wavelengths in different wavelength ranges. The second set of light-emitting elements 104 may further comprise light-emitting elements 1042 configured to emit light having a wavelength in a third wavelength range different from the first wavelength range and the second wavelength range. Put differently, the second set of light-emitting elements 104 may comprise light-emitting elements 1040 configured to emit light having a wavelength in the second wavelength range and light-emitting elements 1042 configured to emit light having a wavelength in the third wavelength range. The second set of light-emitting elements 104 may further comprise light-emitting elements 1044 configured to emit light having a wavelength in a fourth wavelength range different from the first wavelength range, the second wavelength range, and the third wavelength range. Put differently, the second set of light-emitting elements 104 may comprise light-emitting elements 1040 configured to emit light having a wavelength in the second wavelength range, light-emitting elements 1042 configured to emit light having a wavelength in the third wavelength range, and light-emitting elements 1044 configured to emit light having a wavelength in the fourth wavelength range. Light having the wavelength in the second wavelength range may, e.g., appear as green light. Light having the wavelength in the third wavelength range may, e.g., appear as blue light. Light having the wavelength in the fourth wavelength range may, e.g., appear as red light. Put differently, the second set of light-emitting elements 104 may be configured to emit light having one, two, or three distinct colors.

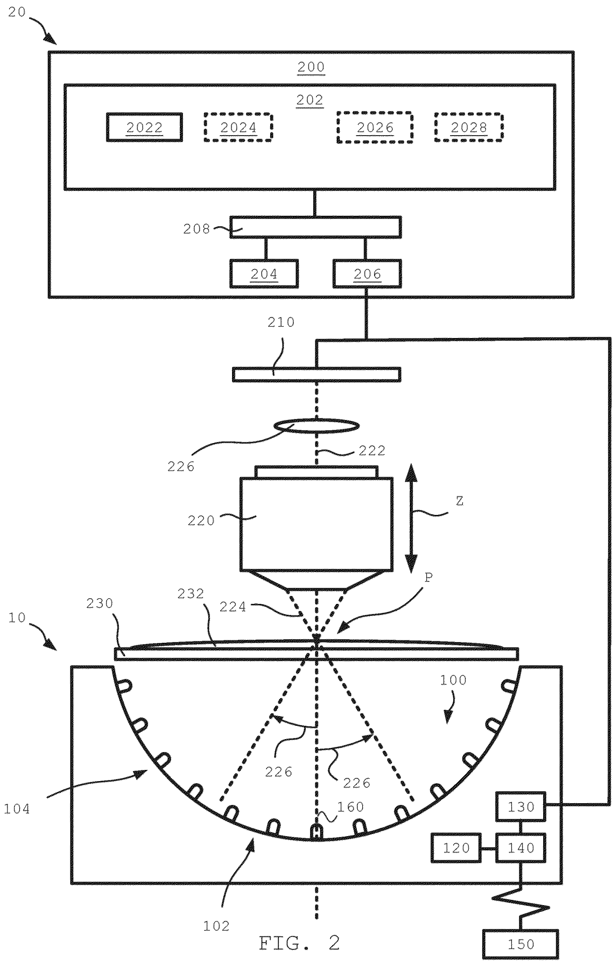

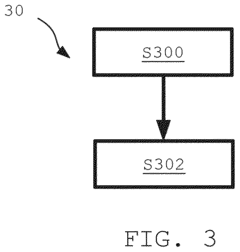

As is illustrated in Fig. 1A, the light source 10 is configured to illuminate an illumination position P. To that end, each light-emitting element 1020, 1040, 1042, 1044 of the plurality of light-emitting elements 100 is configured to illuminate the illumination position P at one of a plurality of illumination angles 110. Here, "illumination angle" should be understood as an angle at which incident light illuminates the illumination position P. An illumination angle may therefore correspond to a direction 1220, 1240 from which a light-emitting element 1020, 1040, 1042, 1044 is configured to illuminate the illumination position P. The illumination angle 1120, 1140 may be defined relative to a central axis 160 of the light source 10. Thus, an illumination angle is in a range from 0 degrees to 180 degrees. Further, no illumination angles are smaller than 0 degrees, i.e., there are no negative illumination angles. Furthermore, no illumination angles are larger than 180 degrees. Hence, even though not explicitly indicated in Fig. 1A, the light-emitting elements on the right-hand side of the central axis 160 are also configured to illuminate the illumination position P at illumination angles at or larger than 0 degrees. A smallest illumination angle of the plurality of illumination angles 110 may be 0 degrees. A greatest illumination angle of the plurality of illumination angles 110 may be 90 degrees or greater. The central axis 160 may, as in the example illustrated in Fig. 1A, be an axis of symmetry of the light source 10. An illumination angle may be referred to as an angle of incidence within the art. Thus, each light-emitting element 1020, 1040, 1042, 1044 of the plurality of light-emitting elements 100 may be configured to illuminate the illumination position P at an angle of incidence of a plurality of angles of incidences. As is illustrated in the example of Fig. 1A, the plurality of light-emitting elements 100 may be arranged (e.g., oriented) such that each light-emitting element 1020, 1040, 1042, 1044 of the plurality of light-emitting elements 100 can illuminate the illumination position P at one of the plurality of illumination angles 110. As an example, the plurality of light-emitting elements 100 may be arranged on a curved surface 170, whereby each light-emitting element 1020, 1040, 1042, 1044 may be substantially oriented such that they may emit light in a direction 1220, 1240 toward the illumination position P. As illustrated in the example of Fig. 1A, the curved surface 170 may be concave along at least one direction along the surface. For example, the curved surface 170 may be a cylindrical surface. The curved surface 170 may be concave along two perpendicular directions along the surface. For example, the curved surface 170 may have a shape similar to a segment of a sphere. A segment of a sphere may be a spherical cap or a spherical dome. Arranging the plurality of light-emitting elements 100 on a curved surface 170 may be advantageous in that a distance R from each light-emitting element 1020, 1040, 1042, 1044 to the illumination position P may be similar. Since this distance R may be similar, an intensity of light emitted from each light-emitting element 1020, 1040, 1042, 1044 of the plurality of light-emitting elements 100 may be similar at the illumination position P given that each light-emitting element 1020, 1040, 1042, 1044 is configured to emit light of similar intensity. This may be understood as an effect of the inverse square law. Thus, the illumination position P may be illuminated by light having similar intensities for each illumination angle of the plurality of illumination angles 110, which may, in turn, allow for a more similar illumination of the illumination position independent of illumination angle. The distance R from each light-emitting element 1020, 1040, 1042, 1044 to the illumination position P may be in a range from 2 cm to 15 cm. It may be advantageous to configure the light source 10 such that the distance from each light-emitting element 1020, 1040, 1042, 1044 to the illumination position P is large enough such that each light-emitting element 1020, 1040, 1042, 1044 may be treated as a point source. Hence, the distance R from each light-emitting element 1020, 1040, 1042, 1044 to the illumination position P may be larger than 15 cm, given that an intensity of light from each light-emitting element 1020, 1040, 1042, 1044 at the illumination position P is high enough to produce a set of digital images as described in connection with Fig. 2 and Fig. 3. It is to be understood that the plurality of light-emitting elements 100 may be arranged on a flat surface or on a surface having an irregular shape. It is further to be understood that Fig. 1A illustrates a cross section of the light source 10. Hence, the curved surface 170 of the light source 10 illustrated in Fig. 1A may be a cylindrical surface or a portion of a spherical surface (or of a quasi-spherical surface). The curved surface 170 of the light source 10 may be bowl shaped. As is illustrated in Fig. 1C, the curved surface 170 may be formed of facets 1702, 1704, 1706. Put differently, the curved surface 170 may be formed of a plurality of flat surfaces 1700. Thus, the curved surface 170 may be piecewise flat. The curved surface 170 may be a portion of a quasi-spherical surface comprising a plurality of facets or segments. Hence, the curved surface 170 may be a portion of a surface of a polyhedron. An example of such polyhedron may be a truncated icosahedron. In Fig. 1C, several features of the light source 10 discussed in connection with Fig. 1A (e.g., the plurality of light-emitting elements 100) are not shown to improve legibility of the figure. The plurality of light-emitting elements 100 may be arranged on a first face of the facets of the light source 10 of Fig. 1C. The first face of the facets may face the illumination point P of the light source 10. Each light-emitting element 1020, 1040, 1042, 1044 may be arranged such that the light-emitting element 1020, 1040, 1042, 1044 is configured to emit light in a direction substantially parallel to a normal of the associated facet. As is illustrated in Fig. 1C, each facet 1702, 1704, 1706 may be a flat surface having at least three sides. For instance, the curved surface 170 may be formed of facets 1702 having four sides, facets 1704 having five sides, and facets 1706 having six sides. It is to be understood that each facet may be separate entities. Hence, the curved surface 170 may be formed by a plurality of parts, and each facet may be formed by one or more parts. It is further to be understood that each part may include one or more facets. Further, such parts may be arranged in contact with neighboring parts or may be arranged at a distance from neighboring parts. A single part may include all facets. As is illustrated in Fig. 1C, electronics 180 (e.g., the control module 120 and/or the communication module 130) may be present on a second face of the facet opposite the first face of the facet.

As is illustrated in Fig. 1A, the plurality of illumination angles 110 comprises a first range of illumination angles 112 and a second range of illumination angles 114. As is illustrated in Fig. 1A, the second range of illumination angles 114 is different from the first range of illumination angles 112. The first range of illumination angles 112 may be a continuous range. The second range of illumination angles 114 may be a continuous range. The first range of illumination angles 112 and the second range of illumination angles 114 may partly overlap. As is illustrated in the example of Fig. 1A, the first range of illumination angles 112 and the second range of illumination angles 114 may be non-overlapping ranges. As is further illustrated in the example of Fig. 1A, the first range of illumination angles 112 and the second range of illumination angles 114 may be neighboring ranges. As is illustrated in the example of Fig. 1A, illumination angles 1140 of the second range of illumination angles 114 may be greater than illumination angles 1120 of the first range of illumination angles 112. The first range of illumination angles 112 may correspond to a numerical aperture of a microscope objective to be used with the light source 10. As an example, in case a microscope objective having a numerical aperture of 0.4 is to be used with the light source, the first range of illumination angles 112 may consist of illumination angles from 0 degrees to approximately 24 degrees and the second range of illumination angles 114 may consist of illumination angles greater than 24 degrees. As a further example, in case a microscope objective having a numerical aperture of 0.25 is to be used with the light source 10, the first range of illumination angles 112 may consist of illumination angles from 0 degrees to approximately 15 degrees and the second range of illumination angles 114 may consist of illumination angles greater than 15 degrees.

A majority of light-emitting elements configured to illuminate the illumination position P at illumination angles 1120 of the first range of illumination angles 112 belong to the first set of light-emitting elements 102, and a majority of light-emitting elements configured to illuminate the illumination position P at illumination angles 1140 of the second range of illumination angles 114 belong to the second set of light-emitting elements 104. A minority of light-emitting elements configured to illuminate the illumination position P at illumination angles 1120 of the first range of illumination angles 112 may not belong to the first set of light-emitting elements 102. For instance, a minority of light-emitting elements configured to illuminate the illumination position P at illumination angles 1120 of the first range of illumination angles 112 may belong to the second set of light-emitting elements 104. It has been found that this may allow for improved information associated with a phase of a sample positioned at the illumination position P.

A minority of light-emitting elements configured illuminate the illumination position P at illumination angles 1140 of the second range of illumination angles 114 may not belong to the second set of light-emitting elements 104. For instance, a minority of light-emitting elements configured illuminate the illumination position P at illumination angles 1140 of the second range of illumination angles 114 may belong to the first set of light-emitting elements 102. It has been found that this may allow for information associated with a broader range of wavelengths (e.g., information associated with a color of a sample positioned at the illumination position P) may be captured to greater illumination angles. This may, in turn, allow for capturing information associated with a broader range of wavelengths (e.g., color information) for finer details (corresponding to the greater illumination angles) of a sample positioned at the illumination position.

By the present inventive concept, the optical bandwidth of light is adapted to the illumination angle with which that light predominantly illuminates the illumination position P. In Fourier ptychography microscopy, certain illumination angles may be more sensitive to optical bandwidth than others, and the light source 10 illustrated in Fig. 1A is capable of adapting the optical bandwidth of light to illumination angle. For instance, the light source 10 is capable of illuminating the illumination position P with light having a broader optical bandwidth predominantly in directions for which Fourier ptychography microscopy is less sensitive and with light having a narrower optical bandwidth predominantly in directions for which Fourier ptychography microscopy is more sensitive. As an example, it has been found that predominantly using light having a narrower optical bandwidth for great illumination angles may allow for construction of sharper images using Fourier ptychography algorithms compared to when using light having a broader optical bandwidth for great illumination angles. Thus, a combination of using light having a narrower optical bandwidth for greater illumination angles and light having a broader optical bandwidth for lesser illumination angles may allow constructing sharper images that depict the sample in color (i.e., corresponding to the broader optical bandwidth of the light used for the lesser illumination angles). Put differently, it has been found that Fourier ptychography may be more sensitive to optical bandwidth for greater illumination angles, and less sensitive to optical bandwidth for lesser illumination angles.

Figure 2 illustrates a Fourier ptychography microscopy system 20. The Fourier ptychography microscopy system 20 comprises a light source 10, an image sensor 210, a microscope objective 220, and circuitry 200. The Fourier ptychography microscopy system 20 may further comprise a sample positioning assembly 230.

The sample positioning assembly 230 may be configured to hold a sample 232. The sample 232 may be a biological sample. The sample 232 may be a cytological and/or a pathology sample. Examples of biological samples comprise, but are not excluded to, blood, plasma, bone marrow fluid, etc. The sample 232 may be a non-biological sample. The non-biological sample may be a manmade sample or a naturally occurring sample. Examples of non-biological samples comprise, but are not excluded to, integrated circuits, optical components, microstructures, minerals, metals, etc. The sample positioning assembly 230 may be configured to move the sample 232. The sample positioning assembly 230 may be configured to move the sample 232 along a plane. A normal of that plane may be substantially parallel to an optical axis 222 of the microscope objective 220. It is further to be understood that the sample positioning assembly 230 may be configured to move the sample 232 in a direction Z substantially parallel to the optical axis 222 of the microscope objective 220. Put differently, the sample positioning assembly 230 may be configured to move the sample 232 in a focusing direction of the microscope objective 220. The circuitry 200 may be configured to control the sample positioning assembly 230. For instance, the circuitry 200 may be configured to execute a sample positioning function 2026. The sample positioning function 2026 may be configured to control the position of the sample 232 using the sample positioning assembly 230.

The light source 10 of Fig. 2 may be similar or identical to the light source 10 described in connection with Fig. 1, and to avoid undue repetition, reference is made to the above. The light source 10 is configured to illuminate a sample 232 positioned at the illumination position P of the light source 10.

Even though the image sensor 210 is illustrated as a separate entity in Fig. 2, the image sensor 210 may form part of a camera. The image sensor 210 may, e.g., comprise a charge-coupled device (CCD) sensor and/or a complementary metal-oxide-semiconductor (CMOS) sensor. The image sensor 210 may be capable of capturing digital color images. To that end, the image sensor 210 may comprise a color filter (e.g., a Bayer filter) to allow the image sensor 210 to capture color information of light impinging on the image sensor 210. Alternatively, or additionally, the system may comprise a camera comprising a plurality of image sensors. For instance, the camera may comprise three image sensors. The three image sensors may be configured to detect red light, green light, and blue light, respectively. The image sensor 210 may be capable of capturing digital grayscale images, and, in such case, the image sensor 210 may not comprise a color filter. It is, however, to be understood that the image sensor 210 may comprise a color filter and be capable of capturing digital grayscale images.

The microscope objective 220 is configured to image the sample 232 onto the image sensor 210. For example, the microscope objective 220 may be positioned such that an object plane of the microscope objective 220 coincides with the sample 232 and an image plane of the microscope objective 220 coincides with the image sensor 210. The microscope objective 220 and the light source 10 may be positioned such that the optical axis 222 of the microscope objective 220 and the central axis 160 of the light source 10 are parallel. The microscope objective 220 and the light source 10 may be positioned such that the optical axis 222 of the microscope objective 220 and the central axis 160 of the light source 10 substantially coincide. The microscope objective 220 and the light source 10 may be positioned such that the microscope objective 220 is configured to image a portion of the sample 232 positioned at the illumination position P of the light source 10. It is to be understood that whether an image depicting the sample 232 is formed on the image sensor 210 may depend on the illumination of the sample 232. For instance, in case the sample 232 is illuminated with conventional microscope illumination (e.g., bright-field illumination), an image resembling the sample 232 may be formed on the image sensor 210. However, in case the sample 232 is illuminated with light from only a few directions, or even a single direction, the image forming on the image sensor 210 may not resemble the sample 232. For instance, the sample 232 may be illuminated with light from one or more directions corresponding to angles larger than a numerical aperture 224 of the microscope objective 220. In such case, the image formed on the image sensor 210 may not resemble the sample 232. However, even though the images may not resemble (or depict) the sample 232, those images may comprise information associated with the sample 232.

The microscope objective 220 may be movable along a direction Z substantially parallel to the optical axis 222 of the microscope objective 220. Put differently, the microscope objective 220 may be movable in a focusing direction. The microscope objective 220 may be movable along the direction Z by being coupled to a manual and/or motorized stage (not illustrated). The microscope objective 220 and/or the sample positioning assembly 230 may be movable such that a focused image of the sample 232 may be captured by the image sensor 210. A position of the microscope objective 220 along the direction Z may be controlled by the circuitry 200. For example, the circuitry 200 may be configured to execute a focus function 2028 configured to adjust a position of the microscope objective 220 along the direction Z. The focus function 2028 may be configured to automatically adjust the position of the microscope objective 220 along the direction Z. Put differently, the focus function 2028 may be an autofocus function. Even though not illustrated in the example of Fig. 2, it is to be understood that the Fourier ptychography microscopy system 20 may comprise further components, e.g., one or more of an aperture, a lens, a window, color filters, etc. For instance, the Fourier ptychography microscopy system 20 may, as illustrated in the example of Fig. 2, further comprise a relay lens 226. The relay lens 226 may be aligned with the microscope objective 220.

The first range of illumination angles 112 of the light source 10 may consist of illumination angles lesser than an angle 226 corresponding to the numerical aperture 224 of the microscope objective 220. Put differently, the first set of light-emitting elements 102 may illuminate the sample 232 (or the illumination position P) at illumination angles lesser than the angle 226 corresponding to the numerical aperture 224 of the microscope objective 220. Within Fourier ptychography microscopy, these angles may correspond lower spatial frequencies and thereby to coarser details of the sample 232. It has been found that capturing information of lower spatial frequencies of the sample 232 may be less sensitive to the optical bandwidth of light, whereby light having a broader optical bandwidth may be used to illuminate the sample 232 at illumination angles corresponding to the lower spatial frequencies. This may, in turn, allow the Fourier ptychography microscopy system 20 to capture information regarding the sample 232 for a wide range of wavelengths (e.g., for the first optical bandwidth of the first set of light-emitting elements 102) for illumination angles lesser than, or equal to, the angle 226 corresponding to the numerical aperture 224 of the microscope objective 220. This information may, e.g., be used to construct a digital image depicting the sample 232 in color using a Fourier ptychography microscopy algorithm. Thus, by configuring the system 20 such that light having a broader optical bandwidth illuminates the sample 232 for angles lesser than, or equal to, the angle 226 corresponding to the numerical aperture 224 of the microscope objective 220, information of the sample 232 for a wider range of wavelengths may be captured while still preserving the benefits of Fourier ptychography microscopy.

The second range of illumination angles 114 of the light source 10 may consist of illumination angles greater than the angle 226 corresponding to the numerical aperture 224 of the microscope objective 220. Put differently, the second set of light-emitting elements 104 may illuminate the sample 232 (or the illumination position P) at illumination angles greater than the angle 226 corresponding to the numerical aperture 224 of the microscope objective 220. Within Fourier ptychography microscopy, these angles may correspond to higher spatial frequencies and thereby to finer details of the sample 232. It has been found that capturing information regarding higher spatial frequencies of the sample 232 may be more sensitive to the optical bandwidth of light, whereby light having a narrower optical bandwidth may be used to illuminate the sample 232 at illumination angles corresponding to the higher spatial frequencies. Put differently, it has been found that Fourier ptychography microscopy algorithms may perform better when using narrow-spectrum light for higher spatial frequencies (e.g., for illumination angles greater than the angle 226 corresponding to the numerical aperture 224 of the microscope objective 220). Thus, illuminating the sample 232 with narrow-spectrum light at illumination angles corresponding to higher spatial frequencies may allow for capturing enhanced information regarding, e.g., finer details and/or phase information of the sample 232.

The circuitry 200 is configured to execute an acquisition function 2022. The circuitry 200 may be further configured to execute an image processing function 2024.

The acquisition function 2022 is configured to acquire a set of digital images. To that end, the acquisition function 2022 is configured to control the light source 10 to illuminate the illumination position P with a plurality of illumination patterns and to control the image sensor 210 to capture a digital image for each illumination pattern of the plurality of illumination patterns. An illumination pattern is formed by emitting light from one or more light-emitting elements of the plurality of light-emitting elements 100 of the light source 10. Each digital image of the set of digital images may be associated with an illumination pattern of the plurality of illumination patterns. Each illumination pattern of the plurality of illumination patterns may, e.g., be formed by simultaneously illuminating the sample 232 at one or more illumination angles of the plurality of illumination angles 110, and/or by varying a number of light-emitting elements of the plurality of light-emitting elements 100 that emit light. The acquisition function 2022 may be configured to control and/or adjust one or more light-emitting elements of the plurality of light-emitting elements 100. Each illumination pattern of the plurality of illumination patterns may be formed by illuminating the sample 232 at one or more illumination angles corresponding to non-overlapping portions of Fourier space associated with the sample 232. The acquisition function 2022 may be configured to control the light source 10 such that each illumination pattern is formed by illuminating the sample 232 at one or more illumination angles corresponding to non-overlapping portions of the Fourier space associated with the sample 232. For instance, each illumination pattern of the plurality of illumination patterns may be formed by illuminating the sample 232 at only one illumination angle of the plurality of illumination angles 110. Each illumination pattern of the plurality of illumination patterns may be formed by one or more light-emitting elements of the plurality of light-emitting elements 100. Put differently, each illumination pattern of the plurality of illumination patterns may be formed by simultaneously emitting light from one or more light-emitting elements of the plurality of light-emitting elements 100. However, two different illumination patterns of the plurality of illumination patterns may be formed by illuminating the sample 232 at one or more illumination angles corresponding to, at least partly, overlapping portions of the Fourier space associated with the sample 232. For example, a first illumination pattern may be formed by illuminating the sample 232 at a first set of illumination angles corresponding to non-overlapping portions of the Fourier space associated with the sample 232, and a second illumination pattern may be formed by illuminating the sample 232 at a second set of illumination angles corresponding to non-overlapping portions of the Fourier space associated with the sample 232. An illumination pattern may be formed by simultaneously illuminating the sample 232 with light emitted by one or more light-emitting elements of the first set of light-emitting elements 102. An illumination pattern may be formed by simultaneously illuminating the sample 232 with light emitted by one or more light-emitting elements of the second set of light-emitting elements 104. An illumination pattern may be formed by simultaneously illuminating the sample 232 with light emitted by one or more light-emitting elements of the first set of light-emitting elements 102 and with light emitted by one or more light-emitting elements of the second set of light-emitting elements 104. An illumination angle of the first set of illumination angles 112 and an illumination angle of the second set of illumination angles 114 may correspond to overlapping portions of the Fourier space associated with the sample 232. By comprising a plurality of light-emitting elements 100, the light source 10 may be able to switch between different illumination patterns quicker and/or more reliably compared to a light source comprising a movable light-emitting element capable of illuminating a position (i.e., a position corresponding to the illumination position P) at different illumination angles. The sample 232 may be illuminated under different illumination conditions (i.e., by using different illumination patterns), and more information (e.g., information associated with a refractive index, phase, and/or finer details) of the sample 232 may be collected by capturing digital images of the sample 232 when it is illuminated under the different illumination conditions.

The image processing function 2024 may be configured to process the set of digital images. The image processing function 2024 may be configured to produce a processing output based on the set of digital images. The processing output may be used to draw conclusions regarding the sample 232. For instance, the image processing function 2024 may be configured to one or more of: construct a digital image depicting the sample 232; classify the sample 232 into one or more classes; and detect one or more objects within the sample 232. A skilled person is aware of further applications of the information associated with the sample (e.g., intensity/amplitude and/or phase information) that may be present in the set of digital images. For instance, the machine learning model may additionally or alternatively be trained to construct a digital image depicting a virtually stained sample. Since the set of digital images may comprise information associated with one or more of colors of the sample 232, fine details of the sample 232, a refractive index associated with the sample 232, and phase information associated with the sample 232, this information may be used by the image processing function 2024. The image processing function 2024 may be configured to process the set of digital images using a conventional Fourier ptychography microscopy algorithm. Such conventional Fourier ptychography microscopy algorithms are well known within the art. For instance, conventional Fourier ptychography microscopy algorithms may be configured to construct a digital image depicting the sample 232 at a resolution higher than a resolution which the microscope objective 220 normally is capable of using conventional microscopy illumination (e.g., bright-field illumination). Typically, conventional microscopy illumination illuminates the sample 232 at illumination angles corresponding to overlapping portions of the Fourier space associated with the sample 232.

Alternatively, or additionally, the image processing function 2024 may be configured to process the set of digital images using a trained machine learning model. To that end, the image processing function 2024 may be configured to input the set of digital images into a machine learning model trained to one or more of: construct a digital image depicting the sample 232; classify the sample 232 into one or more classes; and detect one or more objects within the sample 232. Compared to a conventional Fourier ptychography microscopy algorithm, an enhanced image processing function capable of more accurate predictions from the set of digital images may be allowed. Further, using a machine learning model may provide a less complex implementation of the image processing function 2024 compared to a conventional Fourier ptychography microscopy algorithm. In particular, it has been found that using a trained machine learning model may be more accurate when processing digital images captured using light having a broader optical bandwidth (e.g., light which the first set of light-emitting elements 102 is configured to emit). As a specific example, the image processing function 2024 may be configured to input the set of digital images into a machine learning model trained to construct a digital image depicting the sample 232, wherein a resolution of the constructed digital image may be higher than a resolution of a digital image of the set of digital images. Thus, a digital image depicting the sample 232 at a resolution higher than what the microscope objective 220 is capable of capturing using conventional microscopy illumination may be constructed by the image processing function 2024.

Even though the circuitry 200 is illustrated as a separate entity in Fig. 2, it is to be understood that the circuitry 200 may form part of an electronic device. The electronic device may, e.g., be a computer, a server, a smartphone, etc. The electronic device may be a local electronic device (i.e., arranged in proximity to the imaging system) or a remote electronic device. Non-limiting examples of a remote electronic device may be a server, a cloud server, a remote computer, a remote smartphone, etc. It is further to be understood that the functionality of the circuitry 200 may be distributed over more than one electronic device. The electronic device may comprise further components, for example input devices (mouse, keyboard, touchscreen, etc.) and/or a display. As is illustrated in Fig. 2, the circuitry 200 may comprise one or more of a memory 202, a processing unit 204, a communication interface 206, and a data bus 208. The memory 202, the processing unit 204, and the communication interface 206 may communicate (e.g., exchange data) via the data bus 208. The processing unit 204 may comprise a central processing unit (CPU) and/or a graphical processing unit (GPU). The communication interface 206 may be configured to communicate with external devices. For example, the communication interface 206 may be configured to communicate with servers, computers, external peripherals (e.g., external storage), etc. The external devices may be local devices or remote devices (e.g., a cloud server). As is illustrated in the example of Fig. 2, the image sensor 210 and/or the communication module 130 of the light source 10 may communicate with the circuitry 200 via the communication interface 206. However, it is to be understood that the image sensor 210 and/or the light source 10 may communicate with the circuitry 200 via the data bus 208. Further, the focus function 2028 may control the position of the microscope objective 220 by communicating via the communication interface 206. However, it is to be understood that the focus function 2028 may control that position by communicating via the data bus 208. The communication interface 206 may be configured to communicate with the external devices via an external network (e.g., a local-area network, the internet, etc.). The communication interface 206 may comprise a transceiver. The communication interface 206 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire.

The memory 202 may be a non-transitory computer-readable storage medium. The memory 202 may be a randomaccess memory. The memory 202 may be a non-volatile memory. As is illustrated in the example of Fig. 2, the memory 202 may store program code portions 2022, 2024, 2026, 2028 corresponding to one or more functions. The program code portions 2022, 2024, 2026, 2028 may be executable by the processing unit 204, which thereby performs the functions. Hence, when it is referred to that the circuitry 200 is configured to execute a specific function, the processing unit 204 may execute program code portions 2022, 2024, 2026, 2028 corresponding to the specific function which may be stored on the memory 202. However, it is to be understood that one or more functions of the circuitry 200 may be hardware implemented and/or implemented in a specific integrated circuit. For example, one or more functions may be implemented using field-programmable gate arrays (FPGAs). Hence, one or more functions of the circuitry 200 may be implemented in hardware or software, or as a combination of the two.

Figure 3 is a block scheme of a method 30 for capturing a set of digital images of a sample 232 using the light source 10 described in connection with Fig. 1. The sample 232 is positioned at an illumination position P of the light source 10. The method 30 comprises: illuminating S300 the illumination position P with a plurality of illumination patterns, wherein an illumination pattern is formed by emitting light from one or more light-emitting elements of the plurality of light-emitting elements 100 of the light source 10; and capturing S302 a digital image of the sample 232 for each illumination pattern of the plurality of illumination patterns, thereby forming the set of digital images. A digital image of the sample 232 may be captured S302 using an image sensor 210 and a microscope objective 220 configured to image the sample 232 onto the image sensor 210.

A skilled person would be aware of machine learning, and in particular as to how a machine learning model may be trained and/or how a trained machine learning model may be used. However, in brief, the machine learning model may be a type of supervised machine learning model, for example a network such as U-net or Pix2pix. The machine learning model may be a transformer-based network such as SwinIR. The machine learning model may be a convolutional neural network. The machine learning model may be trained to predict a desired output using example input training data and a ground truth, i.e., the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth (i.e., "correct" or "true" output). The machine learning model may comprise a plurality of layers of neurons, and each neuron may represent a mathematical operation which is applied to the input training data. Typically, the machine learning model comprises an input layer, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network may be a type of neural network comprising one or more layers that represents a convolution operation. In this context, the input training data comprises digital images. A digital image may be represented as matrix (or as an array), and each element in the matrix (or array) may represent a corresponding pixel of the digital image. The value of an element may thereby represent a pixel value and/or color value of the corresponding pixel in the digital image. Hence, the input and output to the machine learning model may be numerical (e.g., a matrix or an array) representing digital images. In this context, the input is a set of digital images (i.e., the training set or the input set). Thus, the input to the machine learning model may be a plurality of matrices, or a three-dimensional matrix. It is, however, to be understood that the machine learning model may take further input during training. In this specific case, the machine learning model is trained using a training set of digital images and a ground truth. The first training set of digital images is acquired in a manner similar to the acquisition of the first input set of digital images. Put differently, the illumination patterns used when acquiring the training set of digital images and the input set of digital images may be similar or identical. The machine learning model may be trained using the training set of digital images as input and the ground truth as the desired output. Put differently, the machine learning model may be trained until a difference between an output of the machine learning model and the ground truth is smaller than a threshold. This difference may within the art be described by a loss function. It may be preferred to train the machine learning model until the loss function is minimized. Put differently, the machine learning model may be trained until the difference between the output of the machine learning model and the ground truth is minimized. The training process may be repeated for a plurality of different training samples (e.g., different training samples of the same and/or of different types), which may allow for the machine learning model to construct digital images of a wider range of sample types and/or with higher accuracy.

The person skilled in the art realizes that the present inventive concept by no means is limited to the preferred variants described above. On the contrary, many modifications and variations are possible within the scope of the appended claims. Additionally, variations to the disclosed variants can be understood and effected by the skilled person in practicing the claimed invention, from a study of the drawings, the disclosure, and the appended claims.

## Claims

1. A light source (10) for a Fourier ptychography microscopy system (20), the light source comprising:
a plurality of light-emitting elements (100), each light-emitting element of the plurality of light-emitting elements (100) being configured to illuminate an illumination position (P) at one (1120) of a plurality of illumination angles (110), the plurality of illumination angles (110) comprising a first range of illumination angles (112) and a second range of illumination angles (114) different from the first range of illumination angles (112), wherein the plurality of light-emitting elements (100) comprises:
a first set of light-emitting elements (102) consisting of light-emitting elements (1020) configured to emit light having a first optical bandwidth, and
a second set of light-emitting elements (104) comprising light-emitting elements (1040, 1042, 1044) configured to emit light having a second optical bandwidth narrower than the first optical bandwidth; and
wherein a majority of light-emitting elements configured to illuminate the illumination position (P) at illumination angles (1120) of the first range of illumination angles (112) belong to the first set of light-emitting elements (102), and a majority of light-emitting elements configured to illuminate the illumination position (P) at illumination angles (1140) of the second range of illumination angles (114) belong to the second set of light-emitting elements (104).

2. The light source (10) according to claim 1,
wherein the light-emitting elements (1020) of the first set of light-emitting elements (102) is further configured to emit light having a wavelength in a first wavelength range, and the light-emitting elements (1040) of the second set of light-emitting elements (104) is further configured to emit light having a wavelength in a second wavelength range different from the first wavelength range.

3. The light source (10) according to claim 2,
wherein the second set of light-emitting elements (104) further comprises light-emitting elements (1042) configured to emit light having a wavelength in a third wavelength range different from the first wavelength range and the second wavelength range.

4. The light source (10) according to claim 3,
wherein the second set of light-emitting elements (104) further comprises light-emitting elements (1044) configured to emit light having a wavelength in a fourth wavelength range different from the first wavelength range, the second wavelength range, and the third wavelength range.

5. The light source (10) according to any one of claims 1-4, wherein light-emitting elements (1020) of the first set of light-emitting elements (102) are configured to emit light having an optical bandwidth of 100 nm or broader.

6. The light source (10) according to any one of claims 1-5, wherein light-emitting elements (1040, 1042, 1044) of the second set of light-emitting elements (104) are configured to emit light having an optical bandwidth of 50 nm or narrower.

7. The light source (10) according to any one of claims 1-6, wherein illumination angles (1140) of the second range of illumination angles (114) are greater than illumination angles (1120) of the first range of illumination angles (112).

8. A Fourier ptychography microscopy system (20) comprising:
a light source (10) according to any one of claims 1-7 configured to illuminate a sample (232) positioned at an illumination position (P) of the light source (10);
an image sensor (210);
a microscope objective (220) configured to image the sample (232) onto the image sensor (210);
and
circuitry (200) configured to execute:
an acquisition function (2022) configured to acquire a set of digital images by being configured to:
control the light source (10) to illuminate the illumination position (P) with a plurality of illumination patterns, wherein an illumination pattern is formed by emitting light from one or more light-emitting elements of the plurality of light-emitting elements (100) of the light source (10), and
control the image sensor (210) to capture a digital image for each illumination pattern of the plurality of illumination patterns.

9. The Fourier ptychography microscopy system (20) according to claim 8, wherein the first range of illumination angles (112) of the light source (10) consists of illumination angles lesser than an angle (226) corresponding to a numerical aperture (224) of the microscope objective (220).

10. The Fourier ptychography microscopy system (20) according to claim 8 or 9, wherein the second range of illumination angles (114) of the light source (10) consists of illumination angles greater than an angle (226) corresponding to a numerical aperture (224) of the microscope objective (220).

11. The Fourier ptychography microscopy system (20) according to any one of claims 8-10, wherein the circuitry (200) is further configured to execute:
an image processing function (2024) configured to process the set of digital images.

12. The Fourier ptychography microscopy system (20) according to claim 11, wherein the image processing function (2024) is configured to input the set of digital images into a machine learning model trained to one or more of:
construct a digital image depicting the sample (232);
classify the sample (232) into one or more classes; and
detect one or more objects within the sample (232).

13. The Fourier ptychography microscopy system (20) according to claim 11 or 12, wherein the image processing function (2024) is configured to input the set of digital images into a machine learning model trained to construct a digital image depicting the sample (232), wherein a resolution of the constructed digital image is higher than a resolution of a digital image of the set of digital images.

14. A method (30) for capturing a set of digital images of a sample (232) using a light source (10) according to any one of claims 1-7, wherein the sample (232) is positioned at an illumination position (P) of the light source (10), the method (30) comprising:
illuminating (S300) the illumination position (P) with a plurality of illumination patterns, wherein an illumination pattern is formed by emitting light from one or more light-emitting elements of the plurality of light-emitting elements (100) of the light source (10); and
capturing (S302) a digital image of the sample (232) for each illumination pattern of the plurality of illumination patterns, thereby forming the set of digital images.

15. The method (30) according to claim 14, wherein a digital image of the sample (232) is captured (S302) using an image sensor (210) and a microscope objective (220) configured to image the sample (232) onto the image sensor (210).
